# EUROPEAN PATENT SPECIFICATION

(11) **EP 2 789 549 B1**
(45) Date of publication and mention of the grant of the patent: **06.04.2022**
(21) Application number: 13768799.2
(22) Date of filing: 08.02.2013
(51) Int. Cl.: B65D 65/40, B32B 5/14, B32B 29/00, B65D 5/62, B65D 85/10, A24F 15/00, D21H 19/00

(54) **PACKAGING SHEET, CIGARETTE PACKAGE USING SAID PACKAGING SHEET, AND OUTER BLANK FOR SAID CIGARETTE PACKAGE**
VERPACKUNGSFOLIE, ZIGARETTENPACKUNG MIT DIESER VERPACKUNGSFOLIE UND ÄUSSERER ZUSCHNITT FÜR DIESE ZIGARETTENPACKUNG
FEUILLE D'EMBALLAGE, PAQUET DE CIGARETTES UTILISANT LADITE FEUILLE D'EMBALLAGE ET ÉTIQUETTE DESTINÉE AUDIT PAQUET DE CIGARETTES

(30) Priority: 28.03.2012 JP 2012073572
(43) Date of publication of application: 15.10.2014
(73) Proprietor: Japan Tobacco, Inc., Tokyo 105-8422 (JP)
(72) Inventor: MITSUSHIO, Satomi, Tokyo 130-8603 (JP)
(74) Representative: Hoffmann Eitle
(86) International application number: PCT/JP2013/052984
(87) International publication number: WO 2013/145882

(56) References cited:
- JP-A- H10 752
- JP-A- H09 124 074
- JP-A- H09 279 499
- JP-A- 2002 205 731
- JP-A- 2011 032 617
- JP-A- 2011 530 459
- JP-U- 3 026 196
- JP-U- S6 085 925

## Description

### Technical Field

The present invention relates to a packaging sheet suited for packaging articles and having a texture of Japanese paper, a cigarette package using the packaging sheet, and an outer blank for the cigarette package.

### Background Art

An outer box of, for example, a cigarette package is formed by a process of folding and bonding a hard outer blank as a packaging sheet. Usually, one-side coated paper is used for such an outer blank, and because of its excellent printability, one-side coated paper is suited for use as outer blanks for cigarette packages.

There has also been known an outer box for a cigarette package wherein the outer box has a coating layer formed on an outer surface thereof, in order to impart a novel feel to the outer box. The coating layer includes fibers and provides the outer box with an outer surface having high frictional resistance (see Patent Document 1, by way of example).

### Citation List

### Patent Literature

Patent Document 1: PCT International Application-Japanese Translation No. 2011-530459
US 2010/032324 A1 relates to a container.
US 2002/113116 A1 relates to a box formed from a blank.
JP H09 124074 A relates to a low-density paper.

### Summary of Invention

### Technical Problem

The outer box (outer blank) having the coating layer, disclosed in Patent Document 1, can therefore make the user experience a novel feel, as distinct from an outer box (outer blank) formed using one-side coated paper. The outer surfaces of both of these outer boxes are, however, poor in cushioning properties.

Meanwhile, after the fabrication of cigarette packages, the cigarette packages undergo a drying step for drying the glue used in the aforementioned bonding process and an overwrapping step for wrapping the cigarette package in a transparent film, to be finished as end-products. Accordingly, the cigarette packages are transferred along a transfer line to locations where the drying step and the overwrapping step are performed. The transfer speed at which the cigarette packages are transferred along the transfer line is extremely high, and therefore, guide surfaces of the transfer line for guiding the outer boxes of the cigarette packages are required to have severely high assembling accuracy (machining accuracy and positioning accuracy).

Specifically, if the assembling accuracy of the transfer line is low and also if the outer surfaces of the cigarette packages have poor cushioning properties as mentioned above, the outer boxes of the cigarette packages are scarred or scratched by the guide surfaces of the transfer line. Cigarette packages having such scars or scratches will have to be rejected as defectives or may cause a jam of cigarette packages on the transfer line, possibly making manufacture of the product itself impossible.

One object of the present invention is to provide a packaging sheet suited for packaging articles and having a texture of Japanese paper. Another object of the present invention is to provide a cigarette package using the packaging sheet and an outer blank for the cigarette package.

### Solution to Problem

The above object is achieved by a packaging sheet as recited in claim 1, a cigarette package using said packaging sheet as recited by claim 10 and an outer blank for said cigarette package as recited by claim 11. Preferred features of the invention are recited in the dependent claims.

The first-mentioned object is achieved by a packaging sheet according to the present invention. The packaging sheet includes: a paper substrate; and a covering affixed to at least part of one side of the paper substrate with an adhesive layer therebetween and having a density lower than that of the paper substrate.

In the above packaging sheet, since the density of the covering is lower than that of the paper substrate, the covering has higher cushioning properties than the paper substrate. Thus, where the packaging sheet of the present invention is used to package a product such that the covering of the packaging sheet is exposed, the possibility of the covering being scarred or scratched can be reduced even if the covering is brought into contact with the aforementioned guide surfaces.

Preferably, the covering has at least one of a density falling within a range of from 0.1 to 2.0 g/cm³, a thickness of 20 to 200 µm, and a smoothness of 150 s or less.

Further, the covering may have non-sizing. That is to say, the covering contains no sizing agent.

The covering may be affixed to an entire area of the coat side of the paper substrate, and according to the invention the one side of the paper substrate comprises the coat layer.

In this case, the packaging sheet may further include a printing surface to which an ink layer is transferred. The ink layer is formed on an outer surface or inner surface of the covering or is formed on the one side of the paper substrate.

The present invention further provides a cigarette package including an outer box made from the above packaging sheet, and an outer blank for forming the outer box.

### Advantageous Effects of Invention

In the packaging sheet according to the present invention, the covering is affixed to one side of the paper substrate and has a density lower than that of the paper substrate. The covering imparts cushioning properties suitable for packaging to the packaging sheet and provides a texture of Japanese paper, and thus, the packaging sheet is suited for use as an outer blank for forming an outer box for a cigarette package or the like.

### Brief Description of Drawings

FIG. 1 is a perspective view of a packaging sheet according to one embodiment of the present invention.
FIG. 2 is an enlarged view of part of the packaging sheet shown in FIG. 1.
FIG. 3 is a perspective view of an outer box for a cigarette package, the outer box being formed from an outer blank using the packaging sheet shown in FIG. 1.
FIG. 4 shows the outer blank for forming the outer box of FIG. 3.
FIG. 5 is an enlarged view of part of a packaging sheet according to a modification.

### Description of Embodiments

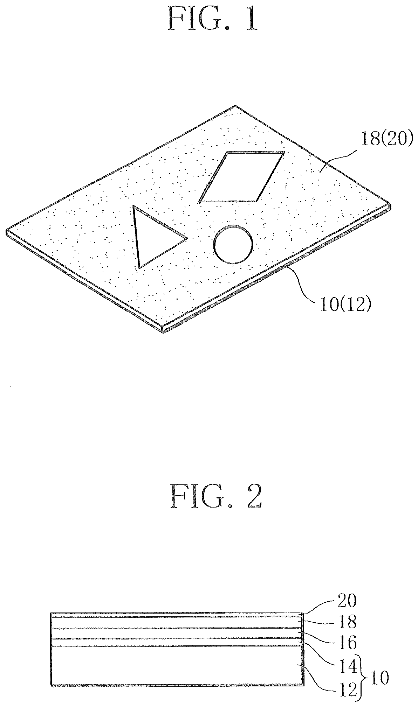

Referring first to FIGS. 1 and 2, a packaging sheet according to one embodiment of the present invention includes, for example, one-side coated paper 10 as a paper substrate. The one-side coated paper 10 has base paper 12 and a coat layer 14 formed on one side of the base paper 12. A covering 18 is affixed to the coat layer 14 with an adhesive layer 16 therebetween. The covering 18 is made of plant fiber or synthetic fiber and covers at least part of the coat layer 14 of the one-side coated paper 10. In the illustrated embodiment, the covering 18 covers an entire area of the coat layer 14.

The covering 18 has a density lower than that of the base paper 12 of the one-side coated paper 10 and imparts high cushioning properties to the packaging sheet. Where the one-side coated paper 10 is used as an outer blank for forming an outer box for a cigarette package, for example, the base paper 12 of the one-side coated paper 10 has a density of about 7 g/cm³. The covering 18, on the other hand, has a density of 0.1 to 2.0 g/cm³. Accordingly, compared with the outer surface of the one-side coated paper 10, the outer surface of the covering 18 shows noticeable mottlement and/or roughness, which is formed during paper making process, and imparts a texture of Japanese paper to the packaging sheet, namely, to the outer blank.

Adhesive materials suited for forming the adhesive layer 16 include adhesives used for dry laminates, for example, epoxy adhesive, and adhesives used for coextrusion laminates, for example, olefin-based adhesive typified by PE (polyethylene).

Epoxy adhesive for dry lamination is put to use after its solvent is vaporized in advance, and thus it is possible to suppress oozing of the adhesive from the fibers of the covering 18. Accordingly, even though the density of the covering 18 is low, coarseness remains on the surface of the covering 18. Olefin-based adhesive for coextrusion lamination, typified by PE, is applied with heat when put to use. Thus, the adhesive layer 16 has high smoothness and allows the underlying material, namely, the one-side coated paper 10, to be effectively seen therethrough from outside. For the adhesive layer 16, adhesive for wet lamination can also be used. In this case, however, the adhesive oozes from the fibers of the covering 18. To prevent oozing of the adhesive, the covering 18 may be backed with a laminate, in which case, however, adhesiveness of the covering 18 lowers.

Further, in this embodiment, an ink layer 20 is transferred to the outer surface of the covering 18. Thus, the outer surface of the covering 18 serves as a printing surface, and the ink layer 20 draws pictures, patterns, characters, signs and the like on the printing surface. For example, a picture may be drawn using the art of painting such as shadings and gradations, and in this case, the picture can be given a taste of Japanese-style painting.

The covering 18 has relatively high surface roughness, compared with commonly used paper such as the one-side coated paper 10. Thus, as compared with the case where the ink layer is formed directly on the coat layer 14 of the one-side coated paper 10, the thickness of the ink layer 20 on the covering 18 is liable to become uneven. This means that the covering 18 is a suitable material that enables the ink layer 20 to exhibit the effect of natural gradations or shadings. In FIG. 1, geometric figures, that is, a triangle, a circle and a rhombus, are drawn as patterns on the surface of the covering 18.

Preferably, the covering 18 has a thickness of 20 to 200 µm and a surface smoothness of 150 s or less. For the covering 18 having such properties, Manila paper composed mainly of Manila hemp fiber, non-woven fabric, *unryu* paper or the like may be used, for example. *Unryu* paper denotes a kind of paper which has long fibers dispersed on the surface of ground paper such that the paper may have cloud-like patterns.

The packaging sheet suited for use as the outer blank may include, as its covering 18, any one of the Manila papers, non-woven fabrics and *unryu* papers shown in Tables 1 to 3 below.

**[Table 1]**

| | First Manila paper | Second Manila paper | Third Manila paper |
|---|---|---|---|
| Feature | Mottles/rough feel | | |
| Basis weight (gsm) | 23.1 | 23.7 | 50 |
| Thickness (µm) | 73 | 81 | 168 |
| Density (g/cm³) | 0.32 | 0.29 | 0.3 |
| Surface smoothness (s) | 1.7 | 1.7 | 1.3 |
| Whiteness (%) | 49.2 | 49.2 | 73.1 |

The first and second Manila papers listed in Table 1 are different in the following respect: The second Manila paper contains a sizing agent and thus has high sizing, namely, high printability, compared with the first Manila paper. The third Manila paper contains synthetic resin fiber, unlike the first and second Manila papers.

Generally, the fibers making up Manila paper are strong per se and are also entangled firmly. Thus, where the covering 18 is made of Manila paper, its surface is less likely to be damaged.

**[Table 2]**

| | First non-woven fabric | Second non-woven fabric | Third non-woven fabric | Fourth non-woven fabric |
|---|---|---|---|---|
| Feature | Degree of transparency of mottles is high | | | |
| Basis weight (gsm) | 9.1 | 23.3 | 14.3 | 27.4 |
| Thickness (µm) | 34 | 39.9 | 31.5 | 40.9 |
| Density (g/cm³) | 0.27 | 0.58 | 0.46 | 0.67 |
| Surface smoothness (s) | 8.0 | 60.6 | 55 | 130 |
| Whiteness (%) | 34.6 | 42.7 | 53.0 | 50.5 |

The first to fourth non-woven fabrics listed in Table 2 are all made of rayon fibers. Among the first to fourth non-woven fabrics, only the second non-woven fabric is backed with a laminate layer of PE.

Compared with low-density paper having no sizing, the non-woven fabrics shown in Table 2 have high surface smoothness. Accordingly, the first to fourth non-woven fabrics can be used as the covering 18 without being separately imparted with sizing. In such case, the covering 18 is soft and highly elastic to the touch and provides a pleasant feel.

**[Table 3]**

| | First *unryu* paper | Second *unryu* paper |
|---|---|---|
| Feature | Degree of transparency of mottles created during papermaking is high | |
| Basis weight (gsm) | 10.8 | 25 |
| Thickness (µm) | 24.4 | 37.9 |
| Density (g/cm³) | 0.45 | 0.66 |
| Surface smoothness (s) | 72.0 | 124.0 |
| Whiteness (%) | 49.4 | 53.4 |

The first and second *unryu* papers listed in Table 3 each include ground paper made of synthetic fiber, for example, rayon fiber, and cloud-like patterns formed on the surface of the ground paper by using long fibers of rayon or the like.

Where the packaging sheet is used as the outer blank, the paper substrate (one-side coated paper 10) suited for use as the outer blank may have specifications shown in Table 4 below, for example.

**[Table 4]**

| | First paper substrate | Second paper substrate |
|---|---|---|
| Feature | One-side coated paper | |
| Basis weight (gsm) | 215 | 235 |
| Thickness (µm) | 30 | 32.5 |
| Density (g/cm³) | 7.17 | 7.23 |
| Surface smoothness (s) | 482.3 | 525.1 |
| Whiteness (%) | 96.3 | 97.6 |

The first and second paper substrates listed in Table 4 each have a density (approximately 7 g/cm³) higher than the densities of the coverings 18 shown in Tables 1 to 3.

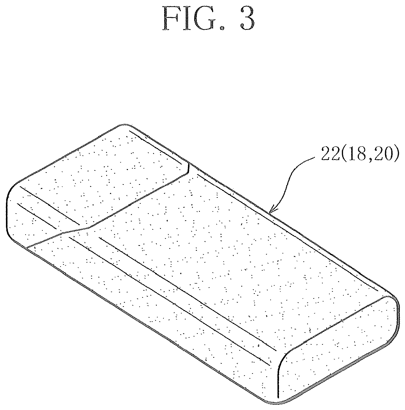

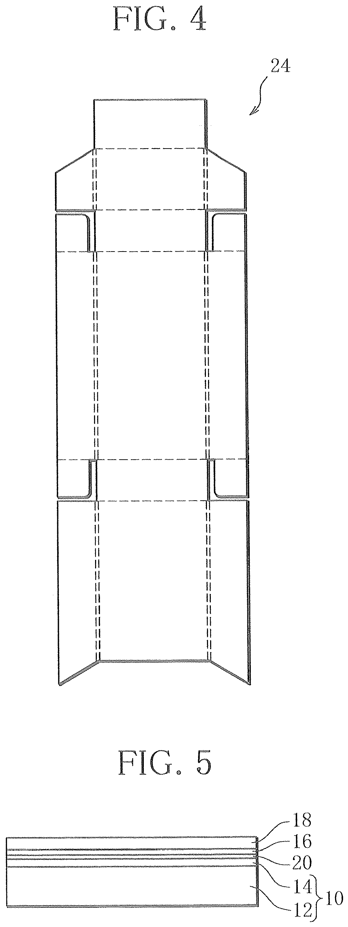

The packaging sheet of the aforementioned embodiment can be used as an outer blank for forming an outer box 22 for a cigarette package, shown in FIG. 3. In the illustrated example, the outer box 22 is of a hinge lid type. An exemplary outer blank is illustrated in FIG. 4. The outer blank 24 shown in FIG. 4 is formed into the outer box 22 by being folded along folding lines, indicated by dashed lines, around an inner pack containing, for example, 20 filter cigarettes. In FIG. 3, the picture, pattern, characters, signs and the like drawn on the outer surface of the outer box 22, namely, the outer blank 24, are omitted.

The cigarette package thus fabricated is transferred along the transfer line and undergoes the aforementioned drying step and overwrapping step, to be finished as an end-product. The drying step includes drying the glue that was used to bond the outer blank being formed into the outer box, and the overwrapping step includes wrapping the cigarette package in a transparent film with a tear tape.

The drying step and the overwrapping step are executed by a drying turret and a wrapping turret, respectively, both forming part of the transfer line. Thus, the cigarette package has to be inserted into and discharged from pockets of the individual turrets. The inner surface of each pocket therefore forms a guide surface of the transfer line.

If the assembling accuracy of the pocket is low, the outer surface of the cigarette package, that is, the outer box 22, is scarred or scratched by the inner surface of the pocket, so that the quality of the outer box 22 is likely to deteriorate.

Where the outer box 22, namely, the outer blank is made of the packaging sheet of the embodiment, on the other hand, the covering 18 forming the outer surface of the outer box 22 has a lower density than the one-side coated paper 10 and has higher cushioning properties than the one-side coated paper 10 itself. Consequently, the outer box 22 of the cigarette package is unlikely to be scarred or scratched by the pockets.

Even if the outer box 22, that is, the covering 18 is scarred or scratched, such a scar or scratch is inconspicuous because the covering 18 has mottlement and/or roughness on its surface, with the result that the appearance of the outer box 22 is not impaired.

The above advantage holds true with respect to not only the pockets of the drying and wrapping turrets but also the guide surface throughout the transfer line. Accordingly, the transfer line is not required to have severely high assembling accuracy, and the packaging sheet of the embodiment is well suited for packaging articles.

Since the covering 18 forms the outer surface of the outer box 22 as stated above, the outer surface has a texture of Japanese paper, and in addition, the covering 18 makes it easy to draw a Japanese-style painting thereon. As a result, the cigarette package using the packaging sheet of the embodiment presents an outer appearance that looks novel to users.

The ink layer 20 may be formed on the coat layer 14 of the one-side coated paper 10 or on the inner surface of the covering 18, as illustrated in FIG. 5. In this case, the pattern and the like represented by the ink layer 20 can be seen through the covering 18. The ink layer 20 may be formed on at least one of the outer surface of the coat layer 14 and the outer and inner surfaces of the covering 18.

For the covering of the packaging sheet of the present invention, paper made from the plant *kozo,* or *Broussonetia kazinoki,* paper made from the plant *mitsumata,* or *Edgeworthia chrysantha,* paper made from the plant *ganpi,* or *Diplomorpha sikokiana,* or paper obtained by mixing the materials of these papers may be used, in place of the Manila papers and the non-woven fabrics shown in Tables 1 to 3. Also, the paper substrate to be used is not limited to the one-side coated papers shown in Table 4.

The packaging sheet of the present invention can be used for various containers and outer blanks for forming such containers, besides the outer box for a cigarette package and the outer blank for forming the outer box.

### Reference Signs List

- 10:: one-side coated paper

- 12:: base paper
- 14:: coat layer
- 16:: adhesive layer
- 18:: covering
- 20:: ink layer
- 24:: outer blank

## Claims

1. A packaging sheet comprising:
a paper substrate (10) having a base paper (12) and a coat layer (14) formed on one side of the base paper (12), wherein the one side of said paper substrate (10) comprises the coat layer (14); and
a covering (18) affixed to at least part of one side of said paper substrate (10) with an adhesive layer (16) therebetween,
**characterized in that**
the covering (18) has a density lower than that of said paper substrate (10) so that the covering (18) has higher cushioning properties than the paper substrate (10), the covering (18) having a density lower than that of the base paper (12); and **in that**
the covering (18) has a higher surface roughness than the coat layer (14).

2. The packaging sheet according to claim 1, wherein the density of said covering (18) falls within a range of from 0.1 to 2.0 g/cm³.

3. The packaging sheet according to claim 2, wherein said covering (18) has a thickness of 20 to 200 µm.

4. The packaging sheet according to claim 2, wherein said covering (18) contains no sizing agent.

5. The packaging sheet according to claim 2, wherein said covering (18) is affixed to an entire area of the coat side of said paper substrate (10).

6. The packaging sheet according to claim 1, further comprising a printing surface to which an ink layer (20) is transferred.

7. The packaging sheet according to claim 6, wherein the ink layer (20) is formed on an outer surface of said covering (18).

8. The packaging sheet according to claim 6, wherein the ink layer (20) is formed on an inner surface of said covering (18).

9. The packaging sheet according to claim 6, wherein the ink layer (20) is formed on the one side of said paper substrate (10).

10. A cigarette package comprising an outer box (22) made from the packaging sheet of any one of claims 1 to 9.

11. An outer blank for forming the outer box (22) of claim 10.

## Patentansprüche

1. Verpackungsbogen, umfassend:
ein Papiersubstrat (10), das ein Trägerpapier (12) und eine Beschichtung (14) an einer Seite des Trägerpapiers (12) aufweist, wobei die eine Seite des Papiersubstrats (10) die Beschichtung (14) umfasst; und
eine Abdeckung (18), die zumindest an einem Teil einer Seite des Papiersubstrats (10) mit einer dazwischenliegenden Haftschicht (16) angebracht ist,
**dadurch gekennzeichnet, dass**
die Abdeckung (18) eine niedrigere Dichte als die des Papiersubstrats (10) aufweist, sodass die Abdeckung (18) höhere Dämpfungseigenschaften als das Papiersubstrat (10) aufweist, wobei die Abdeckung (18) eine niedrigere Dichte als die des Trägerpapiers (12) aufweist; und dadurch, dass
die Abdeckung (18) eine höhere Oberflächenrauheit als die Beschichtung (14) aufweist.

2. Verpackungsbogen nach Anspruch 1, wobei die Dichte der Abdeckung (18) in eine Spanne von 0,1 bis 2,0 g/cm³ fällt.

3. Verpackungsbogen nach Anspruch 2, wobei die Abdeckung (18) eine Dicke von 20 bis 200 µm aufweist.

4. Verpackungsbogen nach Anspruch 2, wobei die Abdeckung (18) kein Leimungsmittel enthält.

5. Verpackungsbogen nach Anspruch 2, wobei die Abdeckung (18) auf einem Gesamtbereich der Beschichtungsseite des Papiersubstrats (10) angebracht ist.

6. Verpackungsbogen nach Anspruch 1, weiter umfassend eine Druckoberfläche, auf die eine Tintenschicht (20) übertragen wird.

7. Verpackungsbogen nach Anspruch 6, wobei die Tintenschicht (20) auf einer Außenoberfläche der Abdeckung (18) gebildet wird.

8. Verpackungsbogen nach Anspruch 6, wobei die Tintenschicht (20) auf einer Innenoberfläche der Abdeckung (18) gebildet wird.

9. Verpackungsbogen nach Anspruch 6, wobei die Tintenschicht (20) auf der einen Seite des Papiersubstrats (10) gebildet wird.

10. Zigarettenverpackung, die eine äußere Schachtel (22) umfasst, die aus dem Verpackungsbogen nach einem der Ansprüche 1 bis 9 hergestellt ist.

11. Äußerer Rohling zum Bilden der äußeren Schachtel (22) nach Anspruch 10.

## Revendications

1. Feuille d'emballage comprenant :
un substrat de papier (10) présentant un papier de base (12) et une couche de revêtement (14) formée sur un premier côté du papier de base (12), dans laquelle le premier côté dudit substrat de papier (10) comprend la couche de revêtement (14) ; et
un habillage (18) apposé sur au moins une partie d'un premier côté dudit substrat de papier (10) avec une couche adhésive (16) entre ceux-ci,
**caractérisée en ce que**
l'habillage (18) présente une densité inférieure à celle dudit substrat de papier (10) de sorte que l'habillage (18) présente des propriétés d'amortissement plus élevées que le substrat de papier (10), l'habillage (18) présentant une densité inférieure à celle du papier de base (12) ; et **en ce que**
l'habillage (18) présente une rugosité de surface plus élevée que la couche de revêtement (14).

2. Feuille d'emballage selon la revendication 1, dans laquelle la densité dudit habillage (18) se situe dans une plage comprise entre 0,1 et 2,0 g/cm³.

3. Feuille d'emballage selon la revendication 2, dans laquelle ledit habillage (18) présente une épaisseur de 20 à 200 µm.

4. Feuille d'emballage selon la revendication 2, dans laquelle ledit habillage (18) ne contient aucun agent de dimensionnement.

5. Feuille d'emballage selon la revendication 2, dans laquelle ledit habillage (18) est apposé sur toute une aire du côté revêtement dudit substrat de papier (10).

6. Feuille d'emballage selon la revendication 1, comprenant en outre une surface d'impression sur laquelle une couche d'encre (20) est transférée.

7. Feuille d'emballage selon la revendication 6, dans laquelle la couche d'encre (20) est formée sur une surface extérieure dudit habillage (18).

8. Feuille d'emballage selon la revendication 6, dans laquelle la couche d'encre (20) est formée sur une surface intérieure dudit habillage (18).

9. Feuille d'emballage selon la revendication 6, dans laquelle la couche d'encre (20) est formée sur le premier côté dudit substrat de papier (10).

10. Emballage de cigarettes comprenant une boîte extérieure (22) fabriquée à partir de la feuille d'emballage selon l'une quelconque des revendications 1 à 9.

11. Ébauche extérieure pour former la boîte extérieure (22) selon la revendication 10.
